# EUROPEAN PATENT SPECIFICATION

(11) **EP 1 522 528 B1**
(45) Date of publication and mention of the grant of the patent: **20.05.2015**
(21) Application number: 03022434.9
(22) Date of filing: 07.10.2003
(51) Int. Cl.: C02F 3/12, C02F 11/04

(54) **Disintegration of anaerobically digested sewage sludge**
Zersetzung von ausgefaultem Klärschlamm
Désintégration de boues d'épuration digérées par voie anaerobie

(43) Date of publication of application: 13.04.2005
(73) Proprietor: VA TECH WABAG GmbH, 1200 Vienna (AT)
(72) Inventor: Vranitzky, Robert, Dipl.-Ing., 1190 Wien (AT); Fuchs, Werner, Dr., 1070 Wien (AT)
(74) Representative: KLIMENT & HENHAPEL

(56) References cited:
- DE-A- 4 030 668
- PATENT ABSTRACTS OF JAPAN vol. 1997, no. 07, 31 July 1997 (1997-07-31) & JP 09 085299 A (EBARA CORP), 31 March 1997 (1997-03-31)
- PATENT ABSTRACTS OF JAPAN vol. 1998, no. 10, 31 August 1998 (1998-08-31) & JP 10 118695 A (OHBAYASHI CORP), 12 May 1998 (1998-05-12)
- PATENT ABSTRACTS OF JAPAN vol. 008, no. 205 (C-243), 19 September 1984 (1984-09-19) & JP 59 096000 A (MITSUBISHI JUKOGYO KK), 2 June 1984 (1984-06-02)
- EDER B ET AL: "KLAERSCHLAMMMINIMIERUNG DURCH ZELLAUFSCHLUSS MIT ULTRASCHALL MINIMISATION OF SEWAGE SLUDGE BY ULTRASONIC CELL DIGESTION" KA - ABWASSER, ABFALL, GFA, HENNEF, DE, vol. 50, no. 3, March 2003 (2003-03), pages 333-342, XP001145071 ISSN: 1616-430X

## Description

The present invention relates to a method for treatment of aqueous organic waste according to the introduction of claim 1 and to a corresponding apparatus according to the introduction of claim 4.

The growing quantities of sludge generated in urban areas require innovative treatment processes that are capable of achieving significant cuts in mass and volume. Technologies that combine efficient sludge mass and volume reductions with the production of reusable sludge products at competitive costs represent the most desirable solutions. The inclusion of disintegration technology into the conventional sludge treatment process leads to reduced sludge quantities and markedly improved sludge quality.

One solution to the problem has already been presented by the applicant in form of WO02/088034, which suggests stages of anaerobically digesting a thickened waste and disintegrating the digested residue by cell wall destruction, whereas at least part of the disintegrated matters are fed back to a thickening stage situated before the digesting stage.

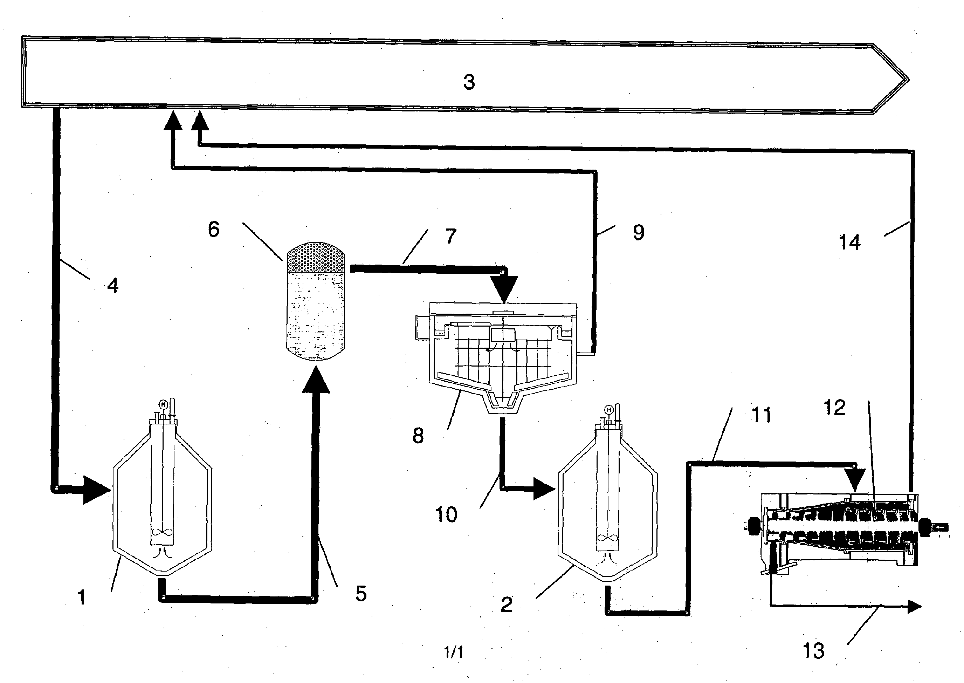

Japanese published patent application JP 09-085299 (Ebara Corp) suggests first anaerobically digesting the waste, then either disintegrating the digested waste, leading the disintegrated waste to a second anaerobic digesting stage followed by a solid/liquid separation (Fig. 1) or after digesting the waste, separating solids and liquids of the digested waste, then disintegrating the digested waste, leading the separated solid waste to a second anaerobical digesting stage (Fig. 2).

DE 40 30 668 A1 shows a process and an apparatus for biological sludge reduction where the waste after diesintegration is subjected to thickening and anaerobic biological treatment.

The article "Klärschlammminimierung durch Zellaufschluss mit Ultraschall" by Berhard Eder and F. Wolfgang Günthert, KA Abwasser, Abfall, GFA, Hennef, DE, vol. 50, no. 3, March 2003 (2003-03), pages 333-342 refers to a process and an apparatus for biological sludge reduction of a wastewater treatment plant where after digesting the waste is subjected to disintegration and after that the waste is subjected to separation into a liquid phase - which is fed back to the wastewater treatment plant - and into a solid phase which is fed back to digestion.

One object of the present invention is to further improve the residual sludge quality. Another object of the invention is to balance the additional carbon demand during periods of high nitrogen loading rates in the denitrification process of the wastewater treatment process which produces the raw sludge. The object is achieved by a process according to claim 1. A respective apparatus for treatment of aqueous organic waste is presented in claim 4.

By having a thickening stage between disintegrating stage and second digesting stage for separating liquids and solids of the disintegrated waste one can take advantage of the sludge quality after disintegration: sludge that has been disintegrated, e.g. by ozone treatment, can be easily thickened by gravity whereas anaerobically digested sludge is considered unsettlable. Thus solid/liquid separation is more effective and the amount of feed sludge into the second digestion stage is reduced. Hence, the sludge treatment time in the second digestion stage can be increased compared to the first digestion stage (assuming that both digestion stages have the same volume), which in turn leads to a better sludge quality since the sludge is more stable.

Part of the liquid phase (sludgewater) separated in the thickening stage is recycled to the wastewater treatment process, where it may be utilized as a carbon source to balance the additional carbon demand in the denitrification process during periods of high nitrogen loading rates.

Favourable implementations of the invention are presented in claims 2, 3 and 5.

The following description refers mainly to disintegration technology using ozone, but the present invention is not restricted to ozonization, which is only described as example. Any other disintegration method (such as ultrasound or cavitation etc.), capable of cell destruction, could be employed as disintegration unit as well.

The use of ozone in the disintegration stage has the following advantages: in comparison to mechanical or thermal disintegration technologies, the oxidation processes have one main common advantage. Refractory COD (complex organic structures) is oxidized and converted to BOD (biodegradable low-molecular compounds, e.g. formic acid or acidic acid). Conversely, as opposed to other oxidation processes (such as wet-oxidation), ozonization does not demand an additional chemical dosage. As a result, effluent posttreatment, such as neutralization etc., is not required downstream of the process. The only by-product of the ozonization process is molecular oxygen, which can be positively reused for aerobic biological degradation processes.

As far as the total costs of ozonization technology are concerned, several aspects demand consideration. Firstly, ozone is a highly reactive oxidation agent and therefore, only small amounts of gas have to be injected, in order to carry out sludge disintegration. As compared with other types of municipal wastewater and sludge treatment plants, the ozonization unit has a small footprint.

The present invention shall be described by an example according to the schematic figure, which shows a wastewater and sludge treatment system with a combination of anaerobic sludge stabilization with sludge disintegration using ozone according to the invention. The plant includes sludge treatment in a two-stage anaerobic digestion process.

The liquid content of raw sludge 4 from the wastewater treatment plant 3 is reduced by a pre-thickening facility (not shown). Then the raw sludge 4 is fed into a first anaerobic digestion reaction tank (digester) 1. Partly digested sludge 5, which is withdrawn from digester 1, having approximately 48-52% VSS is disintegrated with ozone 03 in a disintegration unit 6. The applied ozone dose (0.06 g O3/g DS) is capable to disrupt the microbial cells in the sludge, thereby destroying and fragmenting the cell walls and releasing the cell content. The disintegrated sludge 7 is fed to an intermediate thickening facility 8, where a liquid-solid phase separation in is employed. The intermediate thickening facility 8 is a standard thickening facility, e.g. gravity settling, flotation or centrifugation.

The liquid phase (sludgewater) 9 contains dissolved organic compounds (such as amino acids, nucleic acids and fatty acids), which are released with the cytoplasm. Sludgewater 9 is recycled to the wastewater treatment process, where it may be utilized as a carbon source to balance the additional carbon demand in the denitrification process during periods of high nitrogen loading rates. As a consequence the sludge volume of thickened sludge 10 to be treated in digester 2 (assuming that it has the same volume as digester 1) is reduced by the amount of sludgewater that is withdrawn. Thus the resulting sludge retention time in digester 2 is extended. Under these conditions the achievable degree of sludge stabilization is markedly improved. The solid phase contains cell fragments (biosolids), which also represent a good substrate for biodegradation, as the refractory COD was converted into BOD. The treatment of disrupted and disintegrated biosolids in the anaerobic digester 2 has a number of attractive aspects. The anaerobic digestion of disintegrated biosolids enables advanced sludge stabilization due to the enhanced reduction of organic matter. Moreover, the quantity of digested sludge 11 can be slashed by another 20-30%.

Digested sludge 11 is further dewatered in a standard device 12, e.g. decanter centrifuge, which yields a residual sludge 13 of approximately 30-35% VSS and sludgewater 14 which is recycled to the wastewater treatment process 3. The resulting DS content of dewatered residual sludge 13 will be remarkable higher as compared to conventionally digested sludge. Thus, the sludge volume requiring disposal is reduced by another 10-20%.

The rate-limiting step in the conventional anaerobic digestion process is the initial hydrolysis phase. When sludge disintegration is employed, this reaction is accelerated. Hence, in cases of new plant installations the sludge retention time in anaerobic digestion can be cut. As a consequence, the total digester volume of both reaction tanks can be reduced, which leads to savings in investment and operating costs. The operating costs are influenced in two respects: (a) lower demand on reactor heating and (b) the conversion of refractory COD to BOD, providing higher biogas yields and hence increased electricity generation from biogas.

According to the invention, the process can be applied to all wastewater treatment systems, where residual organic sludges are generated. These include mechanical pretreatment, biological purification processes (such as single-stage-, two-stage activated sludge-, Sequencing Batch Reactor (SBR) process etc.) and chemically enhanced primary treatment (CEPT) processes. Hence, the organic waste to be treated can comprise primary sludge from a primary sedimentation stage and/or activated sludge from a biological purification stage.

For example, according to the described invention the design of the main structures of a sludge treatment plant for a conventional wastewater treatment plant with a capacity of 20,000m³ /day would be as follows:

### Anaerobic digester 1:

| | |
|---|---|
| Sludge Retention Time, t_{R} | 10 [days] |
| Volumetric Loading | 3 - 5 [kg/m³day] |
| Digester Volume | 1,500 [m³] |
| Disintegration Unit: | |
| Reaction Time | approx. 30 [min] |
| Reaction Tank Volume | 3 - 5 [m³] |
| Specific Ozone Demand | 0.1 - 0.15 [kg O₃/kg SS] |
| Capacity of Ozone Generator | 20 [kg O₃/h] |
| Anaerobic digester 2: | |
| Sludge Retention Time, t_{R} | 10 [days] |
| Volumetric Loading | 3 - 5 [kg/m³day] |
| Digester Volume | 1,500 [m³] |

### List of reference numerals:

- 1: First anaerobic digestion reaction tank (digester)
- 2: Second anaerobic digestion reaction tank (digester)
- 3: Wastewater treatment plant
- 4: Raw sludge
- 5: Partly digested sludge
- 6: Disintegration unit (e.g. ozone plant)
- 7: Disintegrated sludge
- 8: Intermediate-thickening facility
- 9: Sludgewater
- 10: Thickened sludge
- 11: Digested sludge
- 12: Dehydration device
- 13: Residual sludge
- 14: Sludgewater

## Claims

1. Method for treatment of aqueous organic waste, especially sewage sludge, from a wastewater treatment plant (3) comprising the stages of
- anaerobically digesting the waste in a first stage,
- disintegrating digested waste from the first stage by cell wall destruction and
- anaerobically digesting disintegrated waste in a second stage different from the first stage, **characterized in that**
- after disintegrating digested waste and before digesting disintegrated waste in the second stage the disintegrated waste undergoes a liquid-solid-separation in a thickening stage,
- whereas the thickened sludge from the thickening stage is fed to the second stage
- and whereas part of the liquid phase separated in the thickening stage is fed back to the wastewater treatment plant (3).

2. Method according to claim 1, **characterized in that** ozonization, ultrasound or cavitation is employed in the disintegration stage.

3. Method according to claim 1 or 2, **characterized in that** the organic waste comprises primary sludge from a primary sedimentation stage and/or activated sludge from a biological purification stage.

4. Apparatus for treatment of aqueous organic waste, especially sludge, according to one of claims 1 to 3, comprising
- a first anaerobic digestion reaction tank (1) for anaerobically digesting the waste in a first stage,
- means (6) for disintegrating digested waste from the first stage by cell wall destruction
- a second anaerobic digestion reaction tank (2) for digesting disintegrated waste in a second stage different from the first stage,
means for feeding raw sludge (4) from a wastewater treatment plant (3) to the first anaerobic digestion reaction tank (1),
**characterized in that** the means (6) for disintegrating digested waste (5) is connected to a thickening device (8) for liquid-solid-separation which device (8) is connected to the second anaerobic digestion reaction tank (2), and that the thickening device (8) comprises means for feeding the separated liquid phase (9) back to the wastewater treatment plant (3).

5. Apparatus according to claim 4, **characterized in that** the means (6) for disintegrating is a means employing ozonization (O3), ultrasound or cavitation.

## Patentansprüche

1. Verfahren zur Behandlung von wässrigem organischem Abfall, insbesondere von Klärschlamm, aus einer Kläranlage (3), welches die folgenden Schritte umfasst
- anaerobe Fermentation des Abfalls in einem ersten Schritt,
- Zerkleinern des fermentierten Abfalls aus der ersten Stufe durch Aufbrechen der Zellwände und
- anaerobe Fermentation des zerkleinerten Abfalls in einer zweiten Stufe, die sich von der ersten Stufe unterscheidet, **dadurch gekennzeichnet, dass**
- der zerkleinerte Abfall, nach dem Zerkleinern des fermentierten Abfalls und vor der Fermentation des zerkleinerten Abfalls in dem zweiten Schritt, einer fest/flüssig-Trennung in einem Eindickungsschritt unterzogen wird,
- wobei der eingedickte Schlamm aus dem Eindickungsschritt dem zweiten Schritt zugeführt wird
- und wobei ein Teil der Flüssigphase, die in dem Eindickungsschritt abgetrennt wird, wieder der Kläranlage (3) zugeführt wird.

2. Verfahren nach Anspruch 1, **dadurch gekennzeichnet, dass** in dem Zerkleinerungsschritt eine Ozonbehandlung, Ultraschall oder Kavitation zur Anwendung kommt.

3. Verfahren nach Anspruch 1 oder 2, **dadurch gekennzeichnet, dass** der organische Abfall primären Schlamm aus einer primären Absetzstufe und/oder Belebtschlamm aus einer biologischen Klärstufe umfasst.

4. Einrichtung zur Behandlung von wässrigem organischem Abfall, insbesondere von Schlamm, gemäß einem der Ansprüche 1 bis 3, umfassend
- einen ersten anaeroben Fermentationsreaktor (1) zur anaeroben Fermentation des Abfalls in einem ersten Schritt,
- Mittel (6) zum Zerkleinern des fermentierten Abfalls aus der ersten Stufe durch Aufbrechen der Zellwände
- einen zweiten anaeroben Fermentationsreaktor (2) zum Fermentieren des zerkleinerten Abfalls in einem zweiten Schritt, der sich von dem ersten Schritt unterscheidet,
- Mittel, die dazu dienen, den rohen Schlamm (4) aus einer Kläranlage (3) dem ersten aeroben Fermentationsreaktor (1) zuzuführen,
**dadurch gekennzeichnet, dass** das Mittel (6) zum Zerkleinern des fermentierten Abfalls (5) mit einer Eindickungsvorrichtung (8) zur fest/flüssig-Trennung verbunden ist, wobei die Vorrichtung (8) mit dem zweiten anaeroben Fermentationsreaktor (2) verbunden ist, und dass die Eindickungsvorrichtung (8) Mittel umfasst, die dazu dienen, die abgetrennte Flüssigphase (9) wieder der Kläranlage (3) zuzuführen.

5. Einrichtung gemäß Anspruch 4, **dadurch gekennzeichnet, dass** es sich bei dem Mittel (6) zum Zerkleinern um ein Mittel handelt, welches eine Ozonbehandlung (03), Ultraschall oder Kavitation zur Anwendung bringt.

## Revendications

1. Procédé de traitement de déchets organiques aqueux, notamment de boues d'épuration, issus d'une station d'épuration (3), comprenant les étapes consistant à
- réaliser une fermentation anaérobie desdits déchets dans une première étape,
- désagréger les déchets fermentés issus de la première étape en provoquant la rupture des parois cellulaires, et
- réaliser une fermentation anaérobie des déchets désagrégés dans une deuxième étape qui est différente de la première étape, **caractérisé en ce que**,
- après à la désagrégation des déchets fermentés et avant la fermentation des déchets désagrégés dans la deuxième étape, on soumet les déchets désagrégés à une séparation liquide/solide dans une étape d'épaississement,
- la boue épaissie étant, à l'issue de la l'étape d'épaississement, acheminée vers la deuxième étape
- et une partie de la phase liquide, qui vient d'être séparée dans l'étape d'épaississement, étant recyclée vers la station d'épuration (3).

2. Procédé selon la revendication 1, **caractérisé en ce que** dans l'étape de désagrégation, on à recours à l'ozonisation, aux ultrasons ou à la cavitation.

3. Procédé selon les revendications 1 ou 2, **caractérisé en ce que** les déchets organiques comprennent de la boue primaire issue d'une étape primaire de sédimentation et/ou de la boue activée issue d'une étape d'épuration biologique.

4. Appareillage qui est destiné à traiter des déchets organiques aqueux, notamment des boues, selon l'une des revendications 1 à 3 et qui comprend
- un premier réacteur de fermentation anaérobie (1) permettant une fermentation anaérobie desdits déchets dans une première étape,
- des moyens (6) permettant de désagréger les déchets fermentés issus de la première étape en provoquant la rupture des parois cellulaires
- un deuxième réacteur de fermentation anaérobie (2) permettant de fermenter les déchets désagrégés dans une deuxième étape qui est différente de la première étape,
- des moyens permettant d'acheminer les boues crues (4), issues d'une station d'épuration (3), vers le premier réacteur de fermentation aérobie (1),
**caractérisé en ce que** les moyens (6) permettant de désagréger les déchets fermentés (5) sont reliés à un dispositif d'épaississement (8) permettant une séparation liquide/solide, le dispositif (8) étant relié au deuxième réacteur de fermentation anaérobie (2), et que le dispositif d'épaississement (8) comprend des moyens permettant de recycler la phase liquide séparée (9) vers le station d'épuration (3).

5. Appareillage selon la revendication 4, **caractérisé en ce que** le moyen (6) de désagrégation est un moyen ayant recours à l'ozonisation (03), aux ultrasons ou à la cavitation.
